# FASCICULE DE BREVET EUROPEEN

(11) **EP 2 044 315 B1**
(45) Date de publication et mention de la délivrance du brevet: **13.11.2019**
(21) Numéro de dépôt: 07823333.5
(22) Date de dépôt: 25.07.2007
(51) Int. Cl.: F02D 41/14, F02D 41/34, F02N 11/04, F02D 41/36, F02D 41/00, F02D 41/30, F02D 13/06, B60K 6/485

(54) **PROCEDE DE GESTION D'UN COUPLE APPLIQUE A UN ARBRE DE SORTIE D'UN MOTEUR THERMIQUE LORS D'UNE DESACTIVATION D'UNE CHAMBRE DE COMBUSTION ET SYSTEME DE GESTION CORRESPONDANT**
VERFAHREN ZUR VERWALTUNG DES DREHMOMENTS EINER AUSGANGSWELLE EINES VERBRENNUNGSMOTORS BEI DEAKTIVIERUNG EINER VERBRENNUNGSKAMMER UND ENTSPRECHENDES VERWALTUNGSSYSTEM
METHOD FOR MANAGING A TORQUE APPLIED TO AN OUTPUT SHAFT OF A COMBUSTION ENGINE WHEN ONE COMBUSTION CHAMBER IS DEACTIVATED, AND CORRESPONDING MANAGEMENT SYSTEM

(30) Priorité: 25.07.2006 FR 0606799
(43) Date de publication de la demande: 08.04.2009
(73) Titulaire: Valeo Systèmes de Contrôle Moteur, 95800 Cergy (FR)
(72) Inventeur: PICRON, Vanessa, 95300 Pontoise (FR); ROCHETTE, Claudine, 78230 LE PECQ (FR); BIZET, Benoît, 95000 Pontoise (FR); GIRARDIN, Anthony, 92190 Meudon (FR); VASILESCU, Claudiu, 75020 Paris (FR)
(86) Numéro de dépôt international: PCT/FR2007/001275
(87) Numéro de publication internationale: WO 2008/012432

(56) Documents cités:
- DE-A1- 19 532 164
- US-A1- 2005 164 826
- US-A1- 2006 032 684
- US-A1- 2006 196 463
- US-B1- 6 382 163

## Description

La présente invention concerne un procédé de gestion d'un couple appliqué à un arbre de sortie d'un moteur thermique lors d'une désactivation d'une chambre de combustion et un système de gestion correspondant.

### ARRIERE PLAN DE L'INVENTION

Un moteur thermique de véhicule automobile comprend généralement des cylindres délimitant des chambres de combustion dans chacune desquelles est monté un piston relié à un arbre de sortie (ou vilebrequin) pour lui appliquer un couple. L'arbre de sortie est lui-même relié, via la boîte de vitesses, à des roues du véhicule pour entraîner celles-ci en rotation. L'arbre de sortie est également relié à une ou plusieurs machines tournantes auxiliaires telles que l'alternateur pour produire l'électricité consommée à bord du véhicule.

Il existe des moteurs comprenant en outre un organe de gestion d'une désactivation d'une ou plusieurs des chambres de combustion. De tels moteurs à chambres de combustion désactivables, comprennent couramment au moins huit chambres de combustion. La désactivation d'une ou plusieurs chambres de combustion permet de limiter la consommation de carburant lorsque la charge du moteur est constante. La désactivation d'une ou plusieurs chambres de combustion présente cependant l'inconvénient d'engendrer un déséquilibrage de l'arbre de sortie susceptible de produire des vibrations et des bruits de fonctionnement relativement importants. Ce déséquilibrage est toutefois d'autant moins sensible que les chambres de combustion sont nombreuses, de sorte que la désactivation des chambres de combustion n'est utilisée que dans les moteurs de forte cylindrée.

Il est connu également du document US 2005/0164826 A1 de réduire le déséquilibrage pendant la phase de désactivation de chambres de combustion du moteur thermique d'un véhicule hybride en utilisant la machine électrique de traction.

II est également connu du document US 6,382,163 de réduire le déséquilibrage pendant la phase de désactivation proprement dite, c'est-à-dire entre les instants de désactivation et de réactivation, en commandant une machine tournante tel qu'un alternodémarreur couplé à l'arbre de sortie. Toutefois, les résultats obtenus ne sont pas très satisfaisants.

### OBJET DE L'INVENTION

II serait donc intéressant de disposer d'un procédé et d'un système permettant d'atténuer les conséquences d'un déséquilibrage de l'arbre de sortie d'un moteur thermique à l'occasion de la désactivation et/ou de la réactivation d'une ou plusieurs chambres de combustion.

### RESUME DE L'INVENTION

Selon l'invention, on propose un procédé de gestion d'un couple appliqué à un arbre de sortie d'un moteur thermique comportant des chambres de combustion dans chacune desquelles est monté un piston relié à l'arbre de sortie pour lui appliquer un couple, l'arbre de sortie étant en outre relié à une machine tournante associée à un organe de gestion, le procédé comportant les étapes de détecter des conditions de désactivation d'une chambre de combustion et de commander la machine tournante pour appliquer à l'arbre de sortie préalablement à la désactivation d'une chambre de combustion et après la désactivation de la chambre de combustion, un couple de compensation tendant à faire évoluer un couple résultant appliqué à l'arbre de sortie vers un couple de désactivation appliqué par le moteur thermique à l'arbre de sortie après désactivation de la chambre de combustion, dans lequel :
- préalablement à la désactivation, le couple de compensation est un couple de freinage évoluant de façon linéaire croissante depuis une valeur nulle, jusqu'à la désactivation, et
- après la désactivation, le couple de compensation est un couple d'accélération évoluant de valeur linéaire décroissante jusqu'à une valeur nulle, depuis la désactivation.

On a constaté que la gestion des phases transitoires par l'anticipation d'une modification du couple résultant appliqué à l'arbre de sortie préalablement à la désactivation réduit le saut de couple aux instants de désactivation et de réactivation, ce qui minimise le déséquilibrage auquel l'arbre de sortie est soumis selon une compensation de premier ordre.

Le couple de compensation étant également appliqué après la désactivation de la chambre de combustion, on évite ainsi toute variation brutale du couple appliqué à l'arbre de sortie à l'instant de la désactivation, ce qui minimise encore le déséquilibrage pendant la désactivation de la chambre de combustion.

Selon un autre aspect avantageux de l'invention, le procédé comporte en outre l'étape d'appliquer à l'arbre de sortie un couple de correction compensant un déséquilibrage de l'arbre de sortie. On arrive ainsi à amortir le déséquilibrage selon une correction de deuxième ordre de sorte que le couple résultant devient stable pendant la quasi totalité de la phase de désactivation de la chambre de combustion.

Selon encore un autre aspect de l'invention, on prévoit un système de gestion d'une désactivation d'au moins une chambre de combustion d'un moteur thermique comportant plusieurs chambres de combustion dans chacune desquelles est monté un piston relié à un arbre de sortie pour lui appliquer un couple, le système de gestion comportant une machine tournante reliée à l'arbre de sortie et associée à un organe de gestion, l'organe de gestion étant configuré pour détecter des conditions de désactivation d'une chambre de combustion et commander la machine tournante pour appliquer sur l'arbre de sortie préalablement à la désactivation d'une chambre de combustion et après la désactivation, un couple de compensation tendant à faire évoluer un couple résultant appliqué à l'arbre de sortie vers un couple de désactivation appliqué par le moteur thermique à l'arbre de sortie après désactivation de la chambre de combustion, dans lequel :
- préalablement à la désactivation, le couple de compensation est un couple de freinage évoluant de façon linéaire croissante depuis une valeur nulle, jusqu'à la désactivation, et
- après la désactivation, le couple de compensation est un couple d'accélération évoluant de valeur linéaire décroissante jusqu'à une valeur nulle, depuis la désactivation.

La machine tournante va alors exercer sur l'arbre de sortie un effort de compensation du déséquilibrage en accélérant ou ralentissant l'arbre de sortie.

Selon une caractéristique, la machine tournante est reliée à l'arbre de sortie pour prélever une part du couple et est commandée par l'organe de gestion pour adapter la part de couple prélevée à la compensation du déséquilibrage.

La part de couple prélevée par la machine tournante est alors déterminée pour compenser le déséquilibrage par exemple en prélevant un couple relativement plus important lorsqu'il est nécessaire de ralentir l'arbre de sortie et un couple relativement moins important lorsqu'il est nécessaire d'accélérer l'arbre de sortie.

Selon une autre caractéristique, la machine tournante est agencée pour fournir un couple additionnel à l'arbre de sortie et l'organe de gestion est agencé pour commander la machine tournante de manière à fournir le couple additionnel en compensation du déséquilibrage.

La machine tournante peut alors fournir du couple à l'arbre de sortie pour accélérer celui-ci de manière à compenser les décélérations de l'arbre de sortie qui seraient liées au déséquilibrage.

Selon un mode de réalisation avantageux, la machine tournante est un alternodémarreur commandé par l'organe de gestion pour fournir un couple additionnel à l'arbre de sortie ou pour prélever sur celui-ci une part de couple, de manière à compenser le déséquilibrage.

L'alternodémarreur est alors piloté pour prélever du couple sur l'arbre de sortie ou pour fournir à l'arbre de sortie un couple additionnel permettant de compenser le déséquilibrage. L'alternodémarreur permet une compensation particulièrement rapide et efficace des déséquilibrages.

De préférence, un détecteur est associé à l'arbre de sortie pour mesurer la vitesse instantanée de rotation de l'arbre de sortie, l'organe de gestion étant relié au détecteur pour commander la machine tournante en fonction de la vitesse instantanée détectée, et/ou l'organe de gestion comprend une mémoire contenant des lois de commande de la machine tournante en fonction de la ou des chambres de combustion désactivées.

La commande de la machine tournante est alors relativement simple.

D'autres caractéristiques et avantages de l'invention ressortiront à la lecture de la description qui suit d'un mode de réalisation particulier non limitatif de l'invention.

### BREVE DESCRIPTION DES DESSINS

II sera fait référence aux dessins annexés, parmi lesquels :

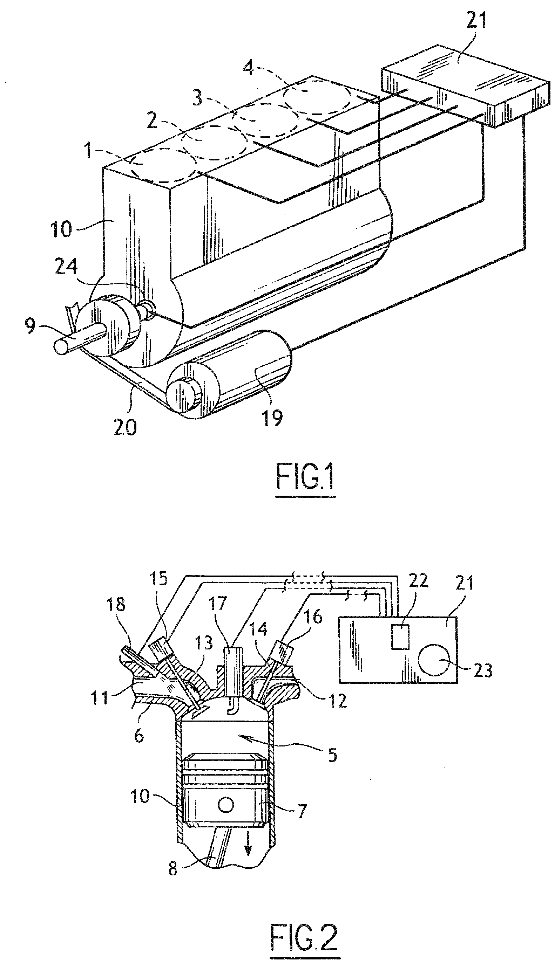

- la figure 1 est une vue schématique en perspective d'un moteur thermique conforme à l'invention,
- la figure 2 est une vue schématique partielle en coupe transversale de ce moteur,
- la figure 3 est une représentation schématique illustrant le couple résultant appliqué à l'arbre de sorite sur un moteur thermique lors d'une désactivation d'une chambre de combustion sans application d'un couple de compensation,
- la figure 4 est une représentation schématique du couple de compensation appliqué selon un premier aspect de l'invention,
- la figure 5 est une représentation analogue à celle de la figure 1 du couple résultant théorique obtenu lors de l'application d'un couple de compensation conforme à la figure 4,
- la figure 6 est une représentation analogue à celle de la figure 5 du couple résultant réel obtenu,
- la figure 7 est une représentation schématique d'un couple de compensation selon l'invention auquel est ajouté un couple de correction compensant un déséquilibrage de l'arbre de sortie,
- la figure 8 est une représentation schématique du couple résultant obtenu par application du couple représenté sur la figure 7.

### DESCRIPTION DETAILLEE DE L'INVENTION

En référence aux figures, le moteur thermique conforme à l'invention comporte un bloc 10 délimitant quatre cylindres 1, 2, 3, 4 en ligne. Chaque cylindre 1, 2, 3, 4 définit une chambre 5 fermée d'un côté par une culasse 6 et de l'autre côté par un piston 7 mobile à coulissement dans le cylindre 1, 2, 3, 4 entre deux positions extrêmes (point mort haut et point mort bas) et reliée par une bielle 8 à un vilebrequin 9 monté à pivote- ment dans le bloc 10.

Dans chaque chambre de combustion 5, débouchent un conduit d'admission 11 et un conduit d'échappement 12 qui sont ménagés dans la culasse 6. Le conduit d'admission 11 et le conduit d'échappement 12 sont équipés respectivement d'une soupape d'admission 13 et d'une soupape d'échappement 14 déplacées entre deux positions d'ouverture et de fermeture par des actionneurs électromagnétiques 15, 16 respectivement.

Une bougie 17 est montée sur la culasse 6 pour déboucher dans la chambre de combustion 5. La bougie 17 est reliée à un circuit d'allumage connu en lui-même et non représenté ici.

Un injecteur 18 d'un dispositif d'alimentation en carburant est monté également sur la culasse 6.

Le moteur comprend en outre un alternodémarreur 19 relié de façon connue en elle-même au vilebrequin 9 par une courroie 20. L'alternodémarreur 19 est un dispositif connu en lui-même, relié à la batterie et susceptible de fonctionner comme un moteur électrique ou comme un alternateur. Lorsqu'il fonctionne comme un moteur électrique, l'alternodémarreur 19 est alimenté par la batterie et fournit au vilebrequin 9 un couple additionnel pour entraîner en rotation le vilebrequin 9. L'alternodémarreur 19 est ainsi utilisé pour le démarrage du moteur thermique. Lorsqu'il fonctionne comme un alternateur, l'alternodémarreur 19 est entraîné par le vilebrequin 9 pour recharger la batterie.

Le moteur comprend en outre un organe de gestion 21, relié notamment aux injecteurs 18, aux actionneurs électromagnétiques 15, 16, au circuit d'allumage et à l'alternodémarreur 19 pour commander ceux-ci. L'organe de gestion 21 comprend par exemple un microprocesseur 22 associé à une mémoire 23 contenant des programmes exécutés par le microprocesseur 22. L'organe de gestion 21 est ici agencé pour détecter de façon connue en soi les conditions d'une désactivation d'une chambre de combustion 5 à l'instant td et la réactivation à l'instant tr.

Un détecteur 24 est monté sur le bloc 10 pour détecter la vitesse instantanée du vilebrequin 9. Le détecteur 24 est relié à l'organe de gestion 21.

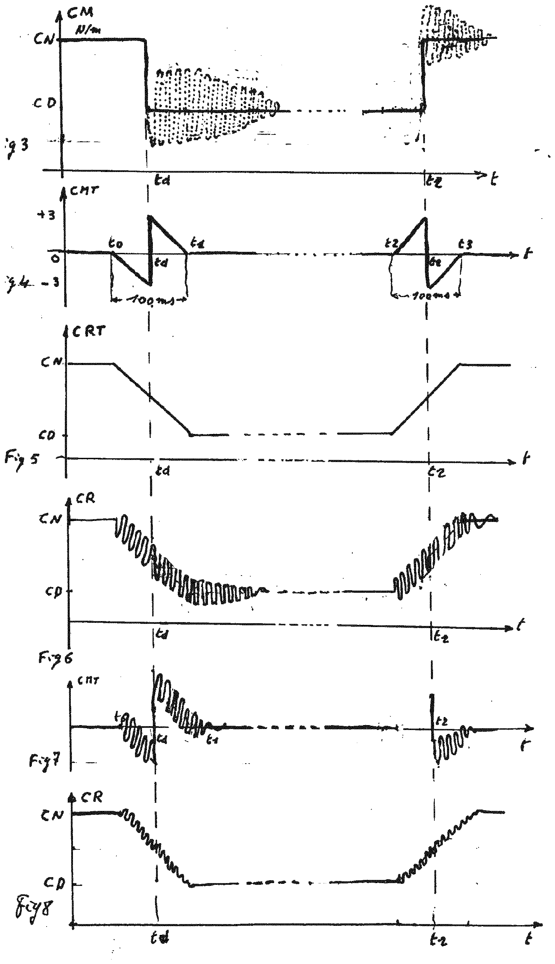

Lorsque le moteur est soumis à une charge constante (c'est-à-dire que le régime du moteur thermique est constant et le vilebrequin 9 tourne à une vitesse nominale), l'unité de contrôle moteur 21 commande la désactivation d'un ou deux des cylindres 1, 2, 3, 4. Le couple résultant théorique obtenu varie entre une valeur CN correspondant au couple nominal avant la désactivation et une valeur CD pendant la désactivation de la chambre de combustion comme représenté en trait plein sur la figure 3. Le couple nominal a par exemple une valeur de 200 N.m tandis que le couple de désactivation a une valeur de 194 N.m, soit un écart de 6 N.m. En réalité, la désactivation d'un ou de deux des cylindres 1, 2, 3, 4 engendre un déséquilibrage du vilebrequin 9 qui se traduit en une succession d'accélération ou de décélération du vilebrequin 9 comme illustré en trait pointillé sur la figure 3.

Selon un premier aspect de l'invention, l'organe de gestion 21 est configuré pour commander la machine tournante afin d'appliquer sur l'arbre de sortie un couple de correction CMT d'une part pendant une période de temps commençant avant l'instant de désactivation td et d'autre part sur une période de temps commençant avant l'instant de réactivation tr. Le couple de compensation est appliqué d'une façon tendant à faire évoluer, de préférence de façon continue et linéaire, un couple résultant appliqué à l'arbre de sortie, y compris le couple de déséquilibrage, vers le couple de désactivation CD jusqu'à atteindre celui-ci. Dans le mode de mise en œuvre illustré par la figure 4, le couple de compensation évolue de façon continue dans le sens d'un freinage croissant depuis l'instant *t0* à partir duquel il est appliqué jusqu'à l'instant de désactivation *td,* puis dans le sens d'une accélération décroissante depuis l'instant de désactivation td jusqu'à la fin de l'application du signal de compensation à l'instant *t1.* Pour les valeurs numériques données précédemment concernant le couple nominal CN et le couple de désactivation CD, le couple de compensation CMT varie donc de façon continue linéaire de 0 à -3 entre *t0* et *td* et de façon linéaire de +3 à 0 entre *td* et *t1.* Les valeurs négatives indiquent un couple de freinage appliqué sur l'arbre de sortie tandis que les valeurs positives indiquent un couple d'accélération appliqué sur l'arbre de sortie. Inversement, au moment de la réactivation de la chambre de combustion, le couple de compensation varie de 0 à +3 entre un instant *t2* précédant l'instant de réactivation *tr* et de -3 à 0 entre l'instant de réactivation *tr* et un instant *t3* où le couple de compensation cesse d'être appliqué. A titre d'exemple, les périodes *t0*, *t1* et *t2*, *t3* ont une durée d'environ 100 ms.

Le couple résultant théorique est illustré par la figure 5 mais en raison du déséquilibre créé par la désactivation et la réactivation, le déséquilibrage qui avait été constaté sur la figure 3 est seulement réduit comme illustré par la figure 6.

Selon un mode de mise en œuvre préféré illustré par la figure 7, un couple de correction est superposé au couple de compensation dans un sens tendant à ramener le couple résultant vers la valeur théorique du couple résultant tel qu'illustré par la figure 5. En pratique, la compensation est effectuée en mesurant les variations de vitesse de rotation du vilebrequin au moyen du détecteur 24 et en convertissant cette variation de vitesse de rotation en une variation de couple résultant appliquée à l'arbre de sortie, le couple de correction étant calculé par l'organe de gestion 21 et appliqué par l'alternodémarreur 19 pour être en opposition de phase avec les variations du couple résultant par rapport au couple recherché.

Compte tenu du décalage entre la détection et le calcul du couple de correction, le couple résultant n'est pas tout à fait identique au couple résultant théorique mais le déséquilibrage est néanmoins minimisé comme illustré par la figure 8 et le déséquilibrage restant est imperceptible pour les occupants du véhicule.

En pratique, le détecteur 24 transmet à l'organe de gestion 21 un signal représentatif de la vitesse instantanée du vilebrequin. L'organe de gestion 21 commande alors l'alternodémarreur 19 de manière que celui-ci :
- prélève une part de couple plus importante sur le vilebrequin 9 lorsque le vilebrequin 9 accélère pour ramener le vilebrequin 9 à sa vitesse nominale,
- prélève une part de couple moins importante ou fournisse un couple additionnel lorsque le vilebrequin 9 décélère pour ramener le vilebrequin 9 à sa vitesse nominale.

La part de couple prélevée et le couple additionnel à fournir sont ici déterminés par l'unité de contrôle moteur 21 en fonction de la différence entre la vitesse instantanée de l'arbre de sortie 9 et la vitesse de rotation nominale que celui-ci devrait avoir pour le régime de fonctionnement du moteur.

L'alternodémarreur 19 permet ainsi de compenser le déséquilibrage du vilebrequin 9 produit par la désactivation d'un ou plusieurs cylindres.

La mémoire 23 comporte ici en outre des lois de commande de l'alternodémarreur 19 en fonction du ou des cylindres désactivés. Il est possible de commander l'alternodémarreur 19 soit en fonction de la vitesse détectée par le détecteur 24, soit en fonction d'une des lois de commande mémorisée dans la mémoire 23. Il est également possible de combiner ces deux modes de commandes en vue d'optimiser la compensation du déséquilibrage.

L'organe de gestion 21, le détecteur 24 et l'alternodémarreur 19 forment ainsi des composants d'un système de gestion de désactivation de cylindres du moteur assurant une compensation de déséquilibrage de celui-ci.

Le moteur peut avantageusement comprendre un capteur de position angulaire à la place du détecteur 24 ou en association avec celui-ci pour permettre une commande prédictive de l'alternodémarreur (en fonction de profils de couple par exemple) éventuellement associé avec un asservissement en fonction de la vitesse de rotation du vilebrequin.

Bien entendu, l'invention n'est pas limitée au mode de réalisation décrit et on peut y apporter des variantes de réalisation sans sortir du cadre de l'invention tel que défini par les revendications.

En particulier, il est possible d'utiliser à la place de l'alternodémarreur toute autre machine tournante susceptible de prélever une part de couple sur le vilebrequin et/ou de fournir au vilebrequin un couple additionnel. La machine tournante utilisée peut ainsi être un alternateur classique. L'alternodémarreur peut en outre être relié au vilebrequin par l'intermédiaire de la boîte de vitesses.

En outre, l'invention est applicable à tout type de moteur et par exemple à un moteur rotatif de type WANKEL ou à un moteur à allumage non commandé comme un moteur diesel. Le nombre de cylindres peut être différent de quatre.

Les organes d'actionnement des soupapes peuvent être des arbres à came.

Bien que le couple de compensation ait été illustré selon une application répartie en deux périodes de durées égales, la compensation peut être effectuée selon une autre répartition par rapport à l'instant de désactivation td, la répartition illustrée étant toutefois préférée pour optimiser le déséquilibrage.

## Revendications

1. Procédé de gestion d'un couple appliqué à un arbre de sortie d'un moteur thermique comportant des chambres de combustion (5) dans chacune desquelles est monté un piston (7) relié à l'arbre de sortie (9) pour lui appliquer un couple, l'arbre de sortie (9) étant en outre relié à une machine tournante (19) associée à un organe de gestion (21), procédé comportant les étapes de détecter des conditions de désactivation d'une chambre de combustion (5) et de commander la machine tournante (19) pour appliquer à l'arbre de sortie (9) préalablement à la désactivation d'une chambre de combustion (5) et après la désactivation de la chambre de combustion, un couple de compensation (CMT) tendant à faire évoluer un couple résultant (CR) appliqué à l'arbre de sortie vers un couple de désactivation (CD) appliqué par le moteur thermique à l'arbre de sortie (9) après désactivation de la chambre de combustion, procédé **caractérisé en ce que** :
- préalablement à la désactivation, le couple de compensation est un couple de freinage évoluant de façon linéaire croissante depuis une valeur nulle, jusqu'à la désactivation, et
- après la désactivation, le couple de compensation est un couple d'accélération évoluant de valeur linéaire décroissante jusqu'à une valeur nulle, depuis la désactivation.

2. Procédé selon la revendication 1 dans lequel un couple de correction est superposé au couple de compensation de manière à :
- prélever une part de couple plus importante sur l'arbre de sortie (9) lorsque ledit arbre de sortie (9) accélère,
- prélever une part de couple moins importante sur l'arbre de sortie (9) ou fournir un couple additionnel sur l'arbre de sortie (9) lorsque ledit arbre de sortie décélère.

3. Procédé selon l'une quelconque des revendications 1 ou 2, **caractérisé en ce que** la machine tournante est commandée pour que le couple résultant (CR) évolue de façon globalement continue.

4. Procédé selon la revendication 3, **caractérisé en ce que** la machine tournante est commandée pour que le couple résultant (CR) évolue de façon globalement linéaire.

5. Procédé selon l'une quelconque des revendications 1 ou 2, **caractérisé en ce que** la machine tournante est commandée pour qu'à l'instant de désactivation (td) le couple résultant soit à une valeur moyenne entre le couple nominal (CN) avant la désactivation et le couple de désactivation (CD).

6. Procédé selon l'une quelconque des revendications 1 ou 2, **caractérisé en ce qu'**il comporte en outre l'étape d'appliquer à l'arbre de sortie (9) un couple de correction compensant un déséquilibrage de l'arbre de sortie.

7. Procédé selon l'une quelconque des revendications 1 ou 2, **caractérisé en ce qu'**il comporte l'étape de commander la machine tournante pour appliquer à l'arbre de sortie (9) préalablement à une réactivation de la chambre de combustion un couple de compensation de réactivation sur l'arbre de sortie tendant à faire évoluer un couple résultant appliqué à l'arbre de sortie vers le couple nominal.

8. Procédé selon la revendication 7, **caractérisé en ce que** le couple de compensation de réactivation est également appliqué après la réactivation de la chambre de combustion.

9. Procédé selon la revendication 7 **caractérisé en ce que** la machine tournante est commandée pour que le couple résultant évolue de façon globalement continue.

10. Procédé selon la revendication 9, **caractérisé en ce que** la machine tournante est commandée pour que le couple résultant évolue de façon globalement linéaire.

11. Système de gestion d'une désactivation d'une chambre de combustion (5) d'un moteur thermique comportant plusieurs chambres de combustion dans chacune desquelles est monté un piston (7) relié à un arbre de sortie (9) pour lui appliquer un couple, le système de gestion comportant une machine tournante (19) reliée à l'arbre de sortie (9) et associée à un organe de gestion (21) relié à la machine tournante, l'organe de gestion (21) étant configuré pour détecter des conditions de désactivation d'une chambre de combustion (5) et commander la machine tournante (19) pour appliquer à l'arbre de sortie (9) préalablement à la désactivation d'une chambre de combustion (5) et après la désactivation, un couple de compensation (CMT) tendant à faire évoluer un couple résultant (CR) appliqué à l'arbre de sortie vers un couple de désactivation (CD) appliqué par le moteur thermique à l'arbre de sortie (9) après désactivation de la chambre de combustion, **caractérisé en ce que** :
- préalablement à la désactivation, le couple de compensation est un couple de freinage évoluant de façon linéaire croissante depuis une valeur nulle, jusqu'à la désactivation, et
- après la désactivation, le couple de compensation est un couple d'accélération évoluant de valeur linéaire décroissante jusqu'à une valeur nulle, depuis la désactivation.

12. Système selon la revendication 11 dans lequel l'organe de gestion (21) est configuré pour superposer un couple de correction au couple de compensation de manière à :
- prélever une part de couple plus importante sur l'arbre de sortie (9) lorsque ledit arbre de sortie (9) accélère,
- prélever une part de couple moins importante sur l'arbre de sortie (9) ou fournir un couple additionnel sur l'arbre de sortie (9) lorsque ledit arbre de sortie décélère.

13. Système selon l'une quelconque des revendications 11 ou 12, **caractérisé en ce que** la machine tournante (19) est commandée pour que le couple résultant évolue de façon globalement continue.

14. Système selon la revendication 13, **caractérisé en ce que** la machine tournante (19) est commandée pour que le couple résultant évolue de façon globalement linéaire.

15. Système selon l'une quelconque des revendications 11 ou 12, **caractérisé en ce que** la machine tournante est commandée pour qu'à l'instant de désactivation (td) le couple résultant soit à une valeur moyenne entre le couple nominal (CN) avant la désactivation et le couple de désactivation (CD).

16. Système selon l'une quelconque des revendications 11 ou 12, **caractérisé en ce que** l'organe de gestion (21) est configuré pour appliquer à l'arbre de sortie (9) un couple de correction compensant un déséquilibrage de l'arbre de sortie.

17. Système selon l'une quelconque des revendications 11 ou 12, **caractérisé en ce que** l'organe de gestion (21) est configuré pour commander la machine tournante pour appliquer à l'arbre de sortie (9) préalablement à une réactivation de la chambre de combustion un couple de compensation de réactivation sur l'arbre de sortie tendant à faire évoluer un couple résultant appliqué à l'arbre de sortie vers le couple nominal.

## Patentansprüche

1. Verfahren zur Verwaltung eines Drehmoments, das an eine Abtriebswelle eines Verbrennungsmotors angelegt wird, der Verbrennungsräume (5) umfasst, in denen jeweils ein Kolben (7) gelagert ist, der mit der Abtriebswelle (9) verbunden ist, um ein Drehmoment an sie anzulegen, wobei die Abtriebswelle (9) ferner mit einer drehenden Maschine (19) verbunden ist, die einer Verwaltungseinrichtung (21) zugeordnet ist, wobei das Verfahren die Schritte umfasst, Deaktivierungsbedingungen eines Verbrennungsraums (5) zu erkennen und die drehende Maschine (19) so zu steuern, dass an die Abtriebswelle (9) vor der Deaktivierung eines Verbrennungsraums (5) und nach der Deaktivierung des Verbrennungsraums ein Ausgleichsdrehmoment (CMT) angelegt wird, das dazu tendiert, ein resultierendes Drehmoment (CR), das an die Abtriebswelle angelegt wird, zu einem Deaktivierungsdrehmoment (CD) hin ändern zu lassen, das vom Verbrennungsmotor nach Deaktivierung des Verbrennungsraums an die Abtriebswelle (9) angelegt wird, wobei das Verfahren **dadurch gekennzeichnet ist, dass**:
- das Ausgleichsdrehmoment vor der Deaktivierung ein Bremsmoment ist, das sich bis zur Deaktivierung von einem Wert null aus linear zunehmend ändert, und
- das Ausgleichsdrehmoment nach der Deaktivierung ein Beschleunigungsmoment ist, das sich von der Deaktivierung linear in einem abnehmenden Wert bis zu einem Wert null ändert.

2. Verfahren nach Anspruch 1, bei dem ein Korrekturdrehmoment dem Ausgleichsdrehmoment so überlagert wird, dass:
- ein größerer Drehmomentanteil an der Abtriebswelle (9) abgegriffen wird, wenn die Abtriebswelle (9) beschleunigt,
- ein kleinerer Drehmomentanteil an der Abtriebswelle (9) abgegriffen wird oder ein zusätzliches Drehmoment an der Abtriebswelle (9) bereitgestellt wird, wenn die Abtriebswelle verzögert.

3. Verfahren nach einem der Ansprüche 1 oder 2, **dadurch gekennzeichnet, dass** die drehende Maschine so gesteuert wird, dass sich das resultierende Drehmoment (CR) insgesamt kontinuierlich ändert.

4. Verfahren nach Anspruch 3, **dadurch gekennzeichnet, dass** die drehende Maschine so gesteuert wird, dass sich das resultierende Drehmoment (CR) insgesamt linear ändert.

5. Verfahren nach einem der Ansprüche 1 oder 2, **dadurch gekennzeichnet, dass** die drehende Maschine so gesteuert wird, dass das resultierende Drehmoment zum Deaktivierungszeitpunkt (td) einen Mittelwert zwischen dem Nenndrehmoment (CN) vor der Deaktivierung und dem Deaktivierungsdrehmoment (CD) hat.

6. Verfahren nach einem der Ansprüche 1 oder 2, **dadurch gekennzeichnet, dass** es ferner den Schritt umfasst, an die Abtriebswelle (9) ein Korrekturdrehmoment anzulegen, das eine Schieflast der Abtriebswelle ausgleicht.

7. Verfahren nach einem der Ansprüche 1 oder 2, **dadurch gekennzeichnet, dass** es den Schritt umfasst, die drehende Maschine so zu steuern, dass an die Abtriebswelle (9) vor einer Reaktivierung des Verbrennungsraums ein Reaktivierungsausgleichsdrehmoment an die Abtriebswelle angelegt wird, das dazu tendiert, ein an die Abtriebswelle angelegtes resultierendes Drehmoment zum Nenndrehmoment hin ändern zu lassen.

8. Verfahren nach Anspruch 7, **dadurch gekennzeichnet, dass** das Reaktivierungsausgleichsdrehmoment auch nach der Reaktivierung des Verbrennungsraums angelegt wird.

9. Verfahren nach Anspruch 7, **dadurch gekennzeichnet, dass** die drehende Maschine so gesteuert wird, dass sich das resultierende Drehmoment insgesamt kontinuierlich ändert.

10. Verfahren nach Anspruch 9, **dadurch gekennzeichnet, dass** die drehende Maschine so gesteuert wird, dass sich das resultierende Drehmoment insgesamt linear ändert.

11. System zur Verwaltung einer Deaktivierung eines Verbrennungsraums (5) eines Verbrennungsmotors, der mehrere Verbrennungsräume umfasst, in denen jeweils ein Kolben (7) gelagert ist, der mit der Abtriebswelle (9) verbunden ist, um ein Drehmoment an sie anzulegen, wobei das Verwaltungssystem eine drehende Maschine (19) umfasst, die mit der Abtriebswelle (9) verbunden ist und einer Verwaltungseinrichtung (21) zugeordnet ist, die mit der drehenden Maschine verbunden ist, wobei die Verwaltungseinrichtung (21) dazu ausgestaltet ist, Deaktivierungsbedingungen eines Verbrennungsraums (5) zu erkennen und die drehende Maschine (19) so zu steuern, dass an die Abtriebswelle (9) vor der Deaktivierung eines Verbrennungsraums (5) und nach der Deaktivierung ein Ausgleichsdrehmoment (CMT) angelegt wird, das dazu tendiert, ein resultierendes Drehmoment (CR), das an die Abtriebswelle angelegt wird, zu einem Deaktivierungsdrehmoment (CD) hin ändern zu lassen, das nach Deaktivierung des Verbrennungsraums an die Abtriebswelle (9) angelegt wird, **dadurch gekennzeichnet ist, dass**:
- das Ausgleichsdrehmoment vor der Deaktivierung ein Bremsmoment ist, das sich bis zur Deaktivierung von einem Wert null aus linear zunehmend ändert, und
- das Ausgleichsdrehmoment nach der Deaktivierung ein Beschleunigungsmoment ist, das sich von der Deaktivierung linear in einem abnehmenden Wert bis zu einem Wert null ändert.

12. System nach Anspruch 11, wobei die Verwaltungseinrichtung (21) dazu ausgestaltet ist, dem Ausgleichsdrehmoment ein Korrekturdrehmoment zu überlagern, so dass:
- ein größerer Drehmomentanteil an der Abtriebswelle (9) abgegriffen wird, wenn die Abtriebswelle (9) beschleunigt,
- ein kleinerer Drehmomentanteil an der Abtriebswelle (9) abgegriffen wird oder ein zusätzliches Drehmoment an der Abtriebswelle (9) bereitgestellt wird, wenn die Abtriebswelle verzögert.

13. Verfahren nach einem der Ansprüche 11 oder 12, **dadurch gekennzeichnet, dass** die drehende Maschine (19) so gesteuert wird, dass sich das resultierende Drehmoment insgesamt kontinuierlich ändert.

14. System nach Anspruch 13, **dadurch gekennzeichnet, dass** die drehende Maschine (19) so gesteuert wird, dass sich das resultierende Drehmoment insgesamt linear ändert.

15. System nach einem der Ansprüche 11 oder 12, **dadurch gekennzeichnet, dass** die drehende Maschine so gesteuert wird, dass das resultierende Drehmoment zum Deaktivierungszeitpunkt (td) einen Mittelwert zwischen dem Nenndrehmoment (CN) vor der Deaktivierung und dem Deaktivierungsdrehmoment (CD) hat.

16. System nach einem der Ansprüche 11 oder 12, **dadurch gekennzeichnet, dass** die Verwaltungseinrichtung (21) dazu ausgestaltet ist, an die Abtriebswelle (9) ein Korrekturdrehmoment anzulegen, das eine Schieflast der Abtriebswelle ausgleicht.

17. System nach einem der Ansprüche 11 oder 12, **dadurch gekennzeichnet, dass** die Verwaltungseinrichtung (21) dazu ausgestaltet ist, die drehende Maschine so zu steuern, dass an die Abtriebswelle (9) vor einer Reaktivierung des Verbrennungsraums ein Reaktivierungsausgleichsdrehmoment an die Abtriebswelle angelegt wird, das dazu tendiert, ein resultierendes Drehmoment, das an die Abtriebswelle angelegt wird, zum Nenndrehmoment hin ändern zu lassen.

## Claims

1. Method for managing a torque applied to an output shaft of a heat engine comprising combustion chambers (5) in each of which is mounted a piston (7) connected to the output shaft (9) in order to apply a torque thereto, the output shaft (9) also being connected to a rotating machine (19) associated with a management member (21), said method comprising the steps of detecting conditions of deactivation of a combustion chamber (5) and of controlling the rotating machine (19) in order to apply to the output shaft (9), prior to the deactivation of a combustion chamber (5), and after the deactivation of the combustion chamber, a compensating torque (CMT) tending to cause a resultant torque (CR) applied to the output shaft to change toward a deactivation torque (CD) applied by the heat engine to the output shaft (9) after deactivation of the combustion chamber, said method being **characterized in that**:
- prior to the deactivation, the compensating torque is a retardation torque that changes linearly in an increasing manner from a value of zero, until deactivation, and
- after the deactivation, the compensating torque is an acceleration torque that changes linearly in a decreasing value to a value of zero, from deactivation.

2. Method according to Claim 1, in which a correction torque is superposed on the compensating torque so as:
- to draw off a greater share of torque from the output shaft (9) when said output shaft (9) accelerates,
- to draw off a smaller share of torque from the output shaft (9) or to supply an additional torque to the output shaft (9) when said output shaft decelerates.

3. Method according to either of Claims 1 and 2, **characterized in that** the rotating machine is controlled so that the resultant torque (CR) changes in a generally continuous manner.

4. Method according to Claim 3, **characterized in that** the rotating machine is controlled so that the resultant torque (CR) changes in a generally linear manner.

5. Method according to either of Claims 1 and 2, **characterized in that** the rotating machine is controlled so that, at the moment of deactivation (td), the resultant torque is at an average value between the nominal torque (CN) before the deactivation and the deactivation torque (CD).

6. Method according to either of Claims 1 and 2, **characterized in that** it also comprises the step of applying to the output shaft (9) a correction torque compensating for an imbalance of the output shaft.

7. Method according to either of Claims 1 and 2, **characterized in that** it comprises the step of controlling the rotating machine in order to apply to the output shaft (9), prior to a reactivation of the combustion chamber, a reactivation compensating torque to the output shaft tending to cause a resultant torque applied to the output shaft to change toward the nominal torque.

8. Method according to claim 7, **characterized in that** the reactivation compensating torque is also applied after the reactivation of the combustion chamber.

9. Method according to claim 7, **characterized in that** the rotating machine is controlled so that the resultant torque changes in a generally continuous manner.

10. Method according to claim 9, **characterized in that** the rotating machine is controlled so that the resultant torque changes in a generally linear manner.

11. System for managing a deactivation of a combustion chamber (5) of a heat engine comprising several combustion chambers in each of which is mounted a piston (7) connected to an output shaft (9) in order to apply a torque thereto, the management system comprising a rotating machine (19) connected to the output shaft (9) and associated with a management member (21) connected to the rotating machine, the management member (21) being configured so as to detect conditions of deactivation of a combustion chamber (5) and to control the rotating machine (19) in order to apply to the output shaft (9), prior to the deactivation of a combustion chamber (5) and after the deactivation, a compensating torque (CMT) tending to cause a resultant torque (CR) applied to the output shaft to change toward a deactivation torque (CD) applied by the heat engine to the output shaft (9) after deactivation of the combustion chamber, **characterized in that**:
- prior to the deactivation, the compensating torque is a retardation torque that changes linearly in an increasing manner from a value of zero, until deactivation, and
- after the deactivation, the compensating torque is an acceleration torque that changes linearly in a decreasing value to a value of zero, from deactivation.

12. System according to Claim 11, in which the management member (21) is configured to superpose a correction torque on the compensating torque so as:
- to draw off a greater share of torque from the output shaft (9) when said output shaft (9) accelerates,
- to draw off a smaller share of torque from the output shaft (9) or to supply an additional torque to the output shaft (9) when said output shaft decelerates.

13. System according to either of Claims 11 and 12, **characterized in that** the rotating machine (19) is controlled so that the resultant torque changes in a generally continuous manner.

14. System according to Claims 13, **characterized in that** the rotating machine (19) is controlled so that the resultant torque changes in a generally linear manner.

15. System according to either of Claims 11 and 12, **characterized in that** the rotating machine is controlled so that, at the moment of deactivation (td), the resultant torque is at an average value between the nominal torque (CN) before the deactivation and the deactivation torque (CD).

16. System according to either of Claims 11 and 12, **characterized in that** the management member (21) is configured to apply to the output shaft (9) a correction torque compensating for an imbalance of the output shaft.

17. System according to either of Claims 11 and 12, **characterized in that** the management member (21) is configured to control the rotating machine in order to apply to the output shaft (9), prior to a reactivation of the combustion chamber, a reactivation compensating torque to the output shaft tending to cause a resultant torque applied to the output shaft to change toward the nominal torque.
